# EUROPEAN PATENT APPLICATION

(11) **EP 2 523 153 A1**
(43) Date of publication of application: **14.11.2012**
(21) Application number: 11166020.5
(22) Date of filing: 13.05.2011
(51) Int. Cl.: G06Q 20/00

(54) **Mobile billing method and system using ARS**

(71) Applicant: KCP Co., Ltd, Seoul 152-050 (KR)
(72) Inventor: Kim, Jeong Il, 152-050 Seoul (KR); Kim, Yong Sung, 442-827 Gyeonggi-do (KR)
(74) Representative: Fleck, Hermann-Josef

(57) **Abstract**

Disclosed herein is a mobile billing method using an automatic response service (ARS) through call transfer including (a) setting a call between a franchisee server and a mobile terminal according to a request from the franchisee server, (b) receiving a request for call transfer from a billing relay server receiving the request for the call transfer from the franchisee server, performing the call transfer and transmitting an ARS announcement to the mobile terminal, (c) receiving a request for billing from the mobile terminal and requesting authentication and billing from the billing relay server, and (d) receiving a result of the authentication and billing approval from the billing relay server and performing call transfer between the mobile terminal and the franchisee server.

## Description

### BACKGROUND OF THE INVENTION

### Field of the Invention

The present invention relates to a mobile billing method and system using an automatic response service (ARS), and, more particularly, to a mobile billing method and system using an ARS that enable a client to receive an announcement regarding billing information and to pay a bill through an ARS connection by call transfer during telephone communication between a customer service representative of a franchisee and the client and that enable any business owner who does not manage an additional ARS server to use a mobile billing method using an ARS under permission of an ARS server management company regarding the use of the ARS server.

### Description of the Related Art

In recent years, various billing means, as substitutes for cash, have been implemented. This has been possible by preparation of environments, such as the Internet, through which an electronic commercial transaction is possible, popularization of automated teller machines (ATMs) having various functions, popularization of mobile communication terminals and activation of financial transaction using the same.

An example of a substitute for cash is electronic money, generally used on the Internet. However, card billing, small-scale billing based on a mobile phone charge and account transfer are used as frequently as cash and electronic money. In particular, such account transfer is possible all day using ATMs, mobile phones, the Internet or the like without visiting banks. Such card billing, small-scale billing and account transfer are increasingly used online stores and online services on the Internet are available.

A billing method using mobile phones has an advantage in that payment of a bill is possible without cash or credit cards since persons who do not carry such cash or credit cards generally carry their mobile phones.

On the other hand, the billing method using mobile phones has problems in that additional application programs and a certificate of authentication must be installed in mobile phones, a large amount of information must be input on a small screen, whereby it is difficult for the elderly, who are not good at use of a keypad or persons with poor vision to use the billing method using mobile phones.

Under such circumstances, a customer service representative of a franchisee may call a client who will pay a bill. In this case, however, the client cannot request the bill to be paid using a mobile phone before cutting off the phone during telephone communication with the customer service representative of the franchisee.

### SUMMARY OF THE INVENTION

Therefore, the present invention has been made in view of the above problems, and it is an object of the present invention to provide a mobile billing method using an ARS that enables a client to receive an announcement regarding billing information and to pay a bill through an ARS connection by call transfer during telephone communication between a customer service representative of a franchisee and the client.

It is another object of the present invention to provide a mobile billing system using an ARS that enables a client to receive an announcement regarding billing information and to pay a bill through an ARS connection by call transfer during telephone communication between a customer service representative of a franchisee and the client.

In accordance with a first aspect of the present invention, the above and other objects can be accomplished by the provision of a mobile billing method using an automatic response service (ARS) through call transfer including (a) setting a call between a franchisee server and a mobile terminal according to a request from the franchisee server, (b) receiving a request for call transfer from a billing relay server receiving the request for the call transfer from the franchisee server, performing the call transfer and transmitting an ARS announcement to the mobile terminal, (c) receiving a request for billing from the mobile terminal and requesting authentication and billing from the billing relay server, and (d) receiving a result of the authentication and billing approval from the billing relay server and performing call transfer between the mobile terminal and the franchisee server.

In the mobile billing method according to the first aspect of the present invention, step (c) may include receiving an inherent identification number input using the mobile terminal.

In the mobile billing method according to the first aspect of the present invention, step (c) may include receiving a password input using the mobile terminal.

In accordance with a second aspect of the present invention, there is provided a mobile billing method using an ARS through call transfer including (a) receiving a request for call transfer between a mobile terminal and an ARS server from a franchisee server and requesting call transfer from the ARS server, (b) receiving a request for authentication and billing from the ARS server having received a request for billing from the mobile terminal and requesting the authentication and the billing from a billing server, and (c) receiving a result of the authentication and billing approval from the billing server and transmitting the result of the authentication and billing approval to the franchisee server and the ARS server.

In the mobile billing method according to the second aspect of the present invention, step (c) may include requesting call transfer between the mobile terminal and the franchisee server from the ARS server.

In accordance with a third aspect of the present invention, there is provided a mobile billing system using an ARS through call transfer including an ARS server to perform a process according to the first aspect of the present invention and a billing relay server to perform a process according to the fourth aspect of the present invention.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram illustrating the construction of a mobile billing system using an automatic response service (ARS) through call transfer according to the present invention;
FIG. 2A is a process view illustrating a mobile billing method using an ARS through call transfer according to a first embodiment of the present invention;
FIG. 2B is a process view illustrating a mobile billing method using an ARS through call transfer according to a second embodiment of the present invention; and
FIG. 3 is a flow chart illustrating an embodiment of a process of a client paying a bill through an ARS using a mobile terminal according to the present invention.

### DETAILED DESCRIPTION OF THE INVENTION

In accordance with a first embodiment of the present invention, a mobile billing method using an automatic response service (ARS) through call transfer includes (a) setting a call between a franchisee server and a mobile terminal according to a request from the franchisee server, (b) receiving a request for call transfer from a billing relay server receiving the request for the call transfer from the franchisee server, performing the call transfer and transmitting an ARS announcement to the mobile terminal, (c) receiving a request for billing from the mobile terminal and requesting authentication and billing from the billing relay server, and (d) receiving a result of the authentication and billing approval from the billing relay server and performing call transfer between the mobile terminal and the franchisee server.

In accordance with a second embodiment of the present invention, a mobile billing method using an ARS through call transfer includes (a) receiving a request for call transfer between a mobile terminal and an ARS server from a franchisee server and requesting call transfer from the ARS server, (b) receiving a request for authentication and billing from the ARS server having received a request for billing from the mobile terminal and requesting the authentication and the billing from a billing server, and (c) receiving a result of the authentication and billing approval from the billing server and transmitting the result of the authentication and billing approval to the franchisee server and the ARS server.

Hereinafter, preferred embodiments of the present invention will be described in more detail with reference to the accompanying drawings.

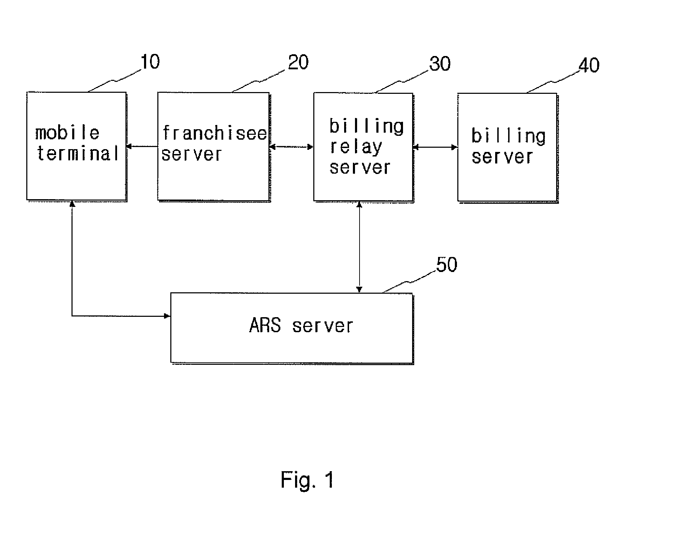

FIG. 1 is a block diagram illustrating the construction of an overall mobile billing system using an ARS according to the present invention. The mobile billing system includes a mobile terminal 10, a franchisee server 20, a billing relay server 30, a billing server 40 and an ARS server 50.

The mobile terminal 10 is a terminal owned by a client who communicates with the franchisee server 20 and has a bill to pay through an ARS. The mobile terminal 10 is connected to the ARS server 50 through a request for call transfer by the franchisee server 20.

The franchisee server 20 is a server managed by a shopping mall business owner who exhibits and sells goods for clients online or offline. In this embodiment, a terminal used by a customer service representative of the franchisee server 20 constitutes a part of the franchisee server 20. Consequently, the franchisee server 20 includes a terminal used by a customer service representative of the franchisee server 20 during communication with a client. The franchisee server 20 transmits a mobile terminal number and billing information including the amount of a bill to pay (hereinafter, referred to as transaction registration information) to the billing relay server 30, requests call transfer between the mobile terminal 10 and the ARS server 50, and receives authentication and billing result from the billing relay server 30.

The billing relay server 30 is a server normally managed by a payment gateway (PG) company that performs electronic billing over the Internet. The billing relay server 30 is connected between the franchisee server 20 and the billing server 40 via a network to perform a process related to electronic billing. Also, the billing relay server 30 relays an authentication and billing process between the mobile terminal 10 and the franchisee server 20 via the ARS server 50. The billing relay server 30 compares a mobile terminal number received from the franchisee server 20 with a mobile terminal number received from the ARS server 50 to perform authentication, retrieves billing information received from the franchisee server 20, and transmits the billing information to the ARS server 50. Also, according to a request for authentication and billing for execution of a billing process received from the ARS server 50, the billing relay server 30 requests authentication and billing about an order in question to the billing server 40, receives the result of the authentication and billing from the billing server 40, and transmits the request for the authentication and billing to the franchisee server 20 and the ARS server 50.

The billing server 40 is a server managed by a credit card company, a mobile communication company or a financial institution that performs authentication and billing business related to a billing process between a client and a franchisee. The billing server 40 performs authentication and billing approval together with the billing relay server 30.

The ARS server 50 performs call setup between the mobile terminal 10 of the client and the franchisee server 20 and performs call transfer between the mobile terminal 10 and the ARS server 50. Also, the ARS server 50 performs an interface function to provide information received from the billing relay server 30 during a billing process between the mobile terminal 10 and the billing relay server 30 as ARS voice information to improve billing convenience. In this embodiment of the present invention, it is possible to provide an ARS service using a single ARS server 50 for a plurality of billing institutions or billing relay institutions that do not have independent ARS systems.

The mobile billing system using the ARS with the above-stated construction according to this embodiment of the present invention requires various physical facilities, such as base stations, relay stations, control stations and communication networks, for mobile communication in addition to the above-mentioned components. The above-mentioned facilities are well known, and therefore, a detailed description thereof will be omitted. However, those skilled in the art will appreciate that any necessary well-known facilities may be included in the mobile billing system according to the present invention in order to physically realize the mobile billing system.

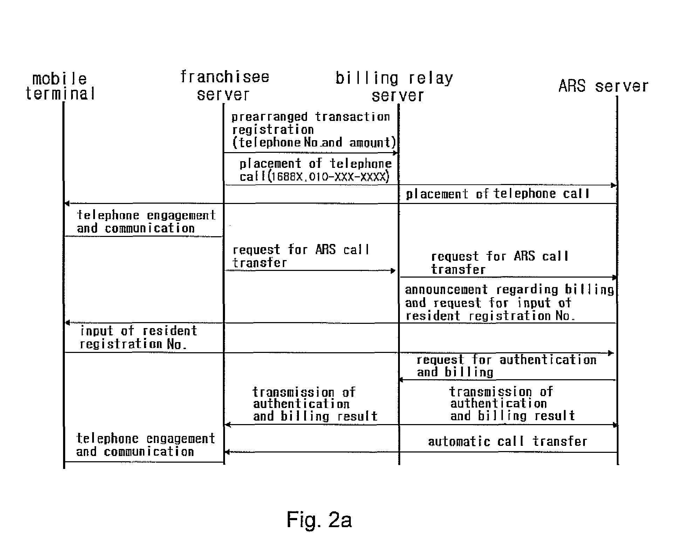

FIG. 2A is a process view illustrating a mobile billing method using an ARS through call transfer according to a first embodiment of the present invention.

The franchisee server 20 transmits prearranged billing information including a mobile terminal number of a client to be contacted and the prearranged amount of a bill to pay (hereinafter, referred to as prearranged transaction registration information) to the billing relay server 30. The billing relay server 30 registers the prearranged transaction registration information received from the franchisee server 20.

The franchisee server 20 requests call setup to the mobile terminal 10 via the ARS server 50. Upon setup of a call between the franchisee server 20 and the mobile terminal 10, the franchisee server 20 communicates with the client as to payment of the bill.

When the client agrees to the payment of the bill during communication, a customer service representative of the franchisee requests the billing relay server 30 to transfer the call set between the mobile terminal 10 and the franchisee server 20 for ARS communication between the mobile terminal 10 and the ARS server 50 through the franchisee server 20.

Upon receipt of the call transfer requested from the franchisee server 20, the billing relay server 30 transmits the request for the call transfer and billing information including the amount of the bill to pay to the ARS server 50.

Upon receipt of the billing information, the ARS server 50 transmits the billing information including the amount of the bill to pay to the mobile terminal 10 as an ARS announcement. In addition, preferably, the ARS server 50 transmits an announcement to request input of an inherent identification number of the client to the mobile terminal 10. The inherent identification number may include all numbers to authenticate the client. For example, a resident registration number, a credit card number, a check card number, etc. may be used as the inherent identification number.

Upon receipt of the billing request (or upon receipt of the billing request together with the inherent identification number) from the mobile terminal 10, the ARS server 50 transmits a request for authentication and billing as to the order in question to the billing relay server 30.

Upon receipt of the request for authentication and billing, the billing relay server 30 requests to the billing server 40 for the authentication and the billing approval. At this time, when the buyer requests the bill to be paid as a mobile phone charge, the billing server 40 is a server managed by a mobile communication company. When the buyer requests the billing using a credit card, the billing server 40 is a server managed by a credit card company. When the buyer requests the billing through account transfer, the billing server 40 is a server managed by a financial institution. This may be achieved by the buyer's input request to select a billing method through the announcement from the ARS server 50 at the previous step.

Upon being requested for the authentication of the client and the billing approval from the billing relay server 30, the billing server 40 transmits the result of the authentication and the billing approval based on the request to the billing relay server 30. Upon receipt of the result of the authentication and the billing approval, the billing relay server 30 transmits the result of the authentication and the billing approval to the franchisee server 20 and the ARS server 50.

The ARS server 50 performs call transfer between the mobile terminal 10 and the franchisee server 20 so that the customer service representative can communicate with the client about information including the result of the approval of the payment of the bill requested to the client. Consequently, it is possible for the buyer to easily pay the electronic bill through the ARS during communication with the customer service representative by inputting a minimum of information including inherent identification number.

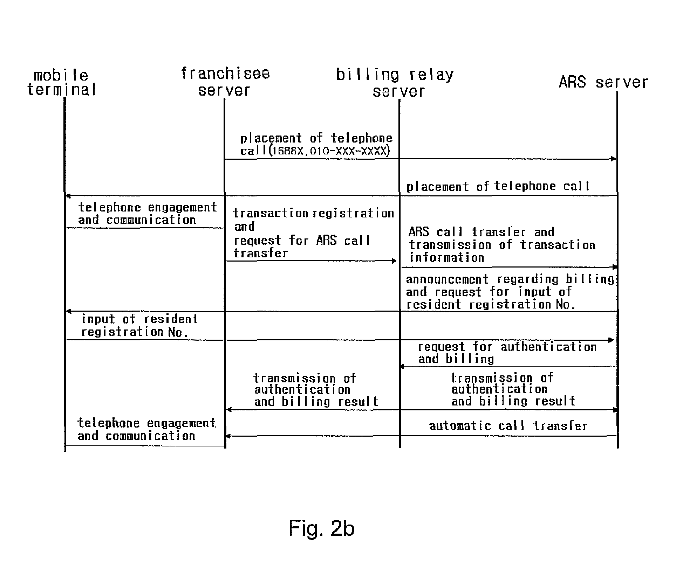

FIG. 2B is a process view illustrating a mobile billing method using an ARS through call transfer according to a second embodiment of the present invention.

The mobile billing method using the ARS through call transfer according to the second embodiment of the present invention performs transaction registration after communication. The mobile billing method using the ARS through call transfer according to the second embodiment of the present invention is identical to the mobile billing method using the ARS through call transfer according to the first embodiment of the present invention except that a prearranged transaction registration process is omitted, a process of requesting transaction registration is included while a franchisee server 20 requests a billing relay server 30 for call transfer after communication between the franchisee server and a client, and therefore, a detailed description thereof will not be given.

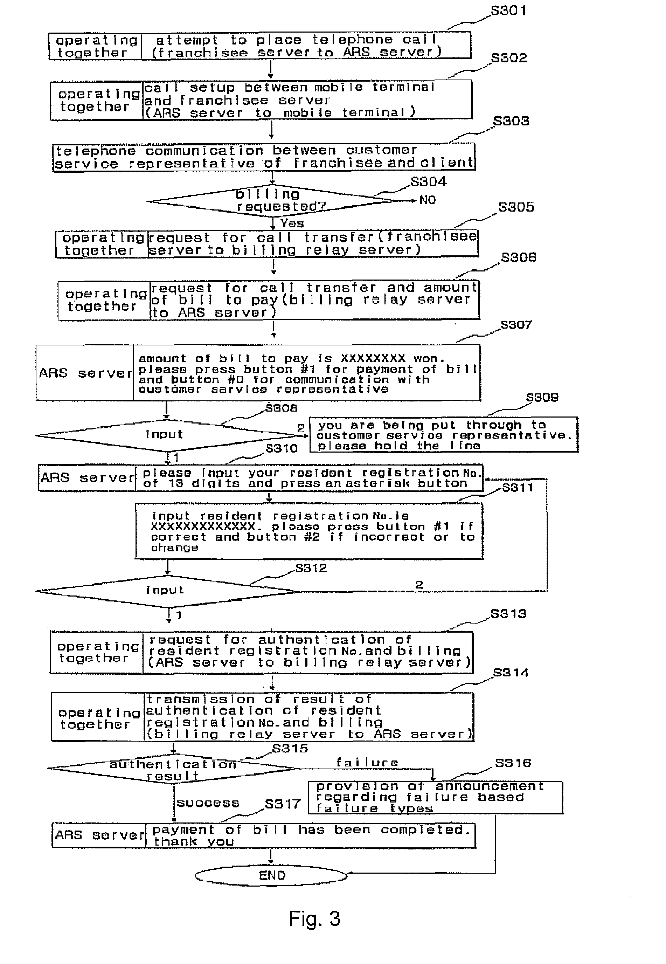

FIG. 3 is a flow chart illustrating an embodiment of a process of a client paying a bill through an ARS using a mobile terminal according to the present invention.

First, a customer service representative of a franchisee attempts to communicate with a mobile terminal 10 of a client via the ARS server 50 (At this time, a terminal used by the customer service representative of the franchisee constitutes a part of the franchisee server 20) (S301).

In response to the customer service representative's attempt, the ARS server 50 sets a call for a telephone call placement between the mobile terminal 10 and the franchisee server 20 (S302). In this embodiment, the ARS server 50 is, for example, a server having an integrated function to perform call setup. Even in a case in which control (setup, release and transfer) of the call may be realized by a physically different apparatus, however, the ARS server 50 may be included in the concept of the ARS server according to the present invention.

When the call is set by the ARS server 50, telephone communication between the customer service representative of the franchisee and the client is performed (S303).

When the client requests to pay a bill during telephone communication between the customer service representative of the franchisee and the client (S304), the franchisee server 20 requests the billing relay server 30 for call transfer between the mobile terminal 10 used by the client and the ARS server 50 (S305).

The billing relay server 30 requests the ARS server 50 for call transfer between the mobile terminal 10 and the ARS server 50 and transmits billing information to the ARS server 50 (S306).

Upon receipt of the billing information, the ARS server 50 transmits a first announcement to the mobile terminal 10 (S307).
- An example of the first announcement: 'The amount of a bill to pay is XXXXXXXX Won. Please press button number 1 for payment of the bill and button number 0 for communication with a customer service representative.'

When the buyer presses button number 0 using the mobile terminal 10 at Step S308 according to the first announcement, a second announcement is transmitted to the mobile terminal 10 (S309).
- An example of the second announcement: 'You are being put through to a customer service representative. Please hold the line.'

On the other hand, when the buyer presses button number 1 using the mobile terminal 10 according to the first announcement, a third announcement to request the client to input a resident registration number is transmitted to the mobile terminal 10 (S310).
- An example of the third announcement: 'Please input your resident registration number of 13 digits and press an asterisk button.'

When the client inputs his/her resident registration number using the mobile terminal 10 according to the third announcement, a fourth announcement is transmitted to the mobile terminal 10 (S311).
- An example of the fourth announcement: 'The input resident registration number is XXXXXXXXXXXXX. Please press button number 1 if this is correct and button number 2 if this is incorrect and you wish to change it.'

When the client presses button number 2 using the mobile terminal 10 at Step S312 according to the fourth announcement, the procedure returns to Step S310. On the other hand, when the client presses button number 1, the ARS server 50 requests the billing relay server 30 for authentication of the resident registration number and billing (S313).

Upon the request for the authentication of the resident registration number and billing, the billing relay server 30 transmits the result of the authentication and the billing to the ARS server 50 (S314).

When the authentication is successfully achieved at Step S315, the ARS server 50 transmits a fifth announcement to the mobile terminal 10 (S317).
- An example of the fifth announcement: 'Payment of the bill has been completed. Thank you.'

On the other hand, when the authentication fails at Step S315, the ARS server 50 transmits an announcement regarding failure based on failure types to the mobile terminal 10 (S316).

As can be seen from the above-described embodiment, in the ARS billing process according to the present invention, it is possible for the client to easily pay the bill using the mobile terminal through the ARS by inputting a minimum of information, such as the resident registration number, when the client wishes to pay the bill during communication with the customer service representative of the franchisee. Consequently, it is possible, even for the elderly who may have trouble typing, to easily pay bills using mobile terminals.

As is apparent from the above description, according to the present invention, a bill is paid through a mobile terminal of a client according to an ARS announcement, and therefore, it is possible for the client to receive an announcement regarding billing information and to pay a bill simply through connection using an ARS number. Consequently, it is not necessary for the client to input additional information while watching a screen of the mobile terminal. In addition, according to the present invention, it is possible for any business owner who does not manage an additional ARS server to use the mobile billing method using the ARS according to the present invention under permission of an ARS server management company regarding the use of the ARS server.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A mobile billing method using an automatic response service (ARS) through call transfer comprising:
(a) setting a call between a franchisee server and a mobile terminal according to a request from the franchisee server;
(b) receiving a request for call transfer from a billing relay server receiving the request for the call transfer from the franchisee server, performing the call transfer and transmitting an ARS announcement to the mobile terminal;
(c) receiving a request for billing from the mobile terminal and requesting authentication and billing from the billing relay server; and
(d) receiving a result of the authentication and billing approval from the billing relay server and performing call transfer between the mobile terminal and the franchisee server.

2. The mobile billing method according to claim 1, wherein step (c) comprises receiving an inherent identification number input using the mobile terminal.

3. The mobile billing method according to claim 1, wherein step (c) comprises receiving a password input using the mobile terminal.

4. A mobile billing method using an ARS through call transfer comprising:
(a) receiving a request for call transfer between a mobile terminal and an ARS server from a franchisee server and requesting call transfer from the ARS server;
(b) receiving a request for authentication and billing from the ARS server having received a request for billing from the mobile terminal and requesting the authentication and the billing from a billing server; and
(c) receiving a result of the authentication and billing approval from the billing server and transmitting the result of the authentication and billing approval to the franchisee server and the ARS server.

5. The mobile billing method according to claim 4, wherein step (c) comprises requesting call transfer between the mobile terminal and the franchisee server from the ARS server.

6. A mobile billing system using an ARS through call transfer comprising an ARS server to perform a process according to claim 1 and a billing relay server to perform a process according to claim 4.
